# EUROPEAN PATENT SPECIFICATION

(11) **EP 3 958 560 B1**
(45) Date of publication and mention of the grant of the patent: **07.06.2023**
(21) Application number: 21202134.9
(22) Date of filing: 12.08.2011
(51) Int. Cl.: H04N 19/107

(54) **APPARATUS FOR ENCODING A MOVING PICTURE**
VORRICHTUNG ZUR CODIERUNG EINES BEWEGTBILDES
APPAREIL DE CODAGE D'UNE IMAGE ANIMÉE

(30) Priority: 17.08.2010 KR 20100079530; 30.06.2011 KR 20110064306
(43) Date of publication of application: 23.02.2022
(62) Divisional of application: 16188174.3
(73) Proprietor: M&K Holdings Inc., Seoul 06725 (KR)
(72) Inventor: OH, Soo Mi, Seongnam-si (KR); YANG, Moonock, Singapore (SG)
(74) Representative: Grünecker Patent- und Rechtsanwälte PartG mbB

(56) References cited:
- MUHAMMED COBAN ET AL: "CU-Level QP Prediction", 5. JCT-VC MEETING; 96. MPEG MEETING; 16-3-2011 - 23-3-2011; GENEVA;(JOINT COLLABORATIVE TEAM ON VIDEO CODING OF ISO/IEC JTC1/SC29/WG11AND ITU-T SG.16 ); URL: HTTP://WFTP3.ITU.INT/AV-ARCH/JCTVC-SITE/,, no. JCTVC-E391, 11 March 2011 (2011-03-11) , XP030008897,

## Description

### [Technical Field]

The present invention relates to an inter prediction encoding method, and more particularly, to an inter prediction encoding method of encoding a motion vector of a current prediction unit using one of a motion vector of a prediction unit adjacent to the current prediction unit and a motion vector located at predetermined position of a reference picture encoded previously.

### [Background Art]

The present invention relates to an apparatus and a method for encoding and decoding by predicting a motion vector of a current prediction unit.

In image compression methods such as Motion Picture Experts Group (MPEG)-1, MPEG-2, MPEG-4 and H.264/MPEG-4 Advanced Video Coding (AVC), one picture is divided into macroblocks to encode an image. And, the respective macroblocks are encoded using inter prediction or intra prediction. Then, an optimal coding mode is selected in the bases of a data size of a macroblock to be encoded and distortion of an original macroblock, and the macroblock is encoded.

In the inter prediction, a motion estimation is used to eliminate temporal redundancy between consecutive pictures. The motion estimation coding is a method which encodes an image by estimating and compensating a motion of the current picture in the unit of block using one or more reference pictures.

In the motion estimation coding, the block most similar to the current block is searched within a predetermined search range for a reference picture using a predetermined estimation function. If the most similar block is searched, only residue between the current block and the most similar block in the reference picture is transmitted to raise a data compression ratio.

At this time, to decode the motion estimation coded current block, information for the motion vector indicating a position difference between the current block and the most similar block in the reference picture. Therefore, it is required to insert encoded information for the motion vector into a bit stream when the current block is encoded. In this process, if the information for the motion vector is encoded and inserted as it is, a compression ratio of an image data is decreased because overhead is increased.

Therefore, in the inter prediction encoding, a motion vector of the current block is predicted using blocks adjacent to the current block, only a difference value between the generated motion vector predictor and the original motion vector is encoded and transmitted, and the information of the motion vector is also compressed.

In H.264, the motion vector predictor, which is a predictor of a motion vector of the current block, is determined as a median of mvA, mvB and mvC. As neighboring blocks are inclined to be similar each other, the motion vector of the current block is determined as a median of the motion vectors of the neighboring blocks.

But, if one or more motion vectors of the neighboring blocks are different from the motion of the current block, the median of the motion vectors of the neighboring blocks may be not an effective motion vector predictor for the current block. Also, a method of selecting a candidate for predicting a motion vector and of encoding or decoding the motion vector more effectively compared to the known motion prediction method is required when the motion of image is little or steady.

Muhammed Coban et Al, "CU-level OP prediction", 5.JCT-VC meeting, JVTVC-E391, 11-03-2011 relates to using the left top most neighbors CU's QP as the predictor for coding of the current CU's QP. If the left neighbor is not available then the top left most neighboring CU's QP is used as the predictor. [Disclosure]

### [Technical Problem]

It is the object of the present invention to improve the encoding efficiency for prediction encoding.

### [Technical Solution]

This object is solved by the subject-matter of the independent claim. A preferred embodiment is defined by the dependent claim. One aspect of the present disclosure provides an inter prediction encoding method, comprising: determining a reference picture index and a motion vector of a current prediction unit, deriving spatial motion vector candidates using available motion vectors of neighboring prediction units each of which exists at a predetermined position, deriving temporal motion vector candidate of the current prediction unit, determining one of the spatial and the temporal motion vector candidates as a motion vector predictor of the current prediction unit, calculating a motion vector difference between the motion vector of the current prediction unit and the motion vector predictor, and encoding the motion vector difference and the reference picture index, wherein the temporal motion vector candidates are motion vectors of the current prediction unit each of which exists at a position in a reference picture encoded previously and corresponding to the current prediction unit or motion vectors of a prediction unit adjacent to the current prediction unit.

### [Advantageous Effects]

An inter prediction encoding method according to the present invention derives spatial motion vector candidates using available motion vectors of neighboring prediction units adjacent to a current unit and existing at a predetermined position, derives temporal motion vector candidate of the current prediction unit using motion vectors of the current prediction unit each of which exists at a position in a reference picture encoded previously and corresponding to the current prediction unit or motion vectors of a prediction unit adjacent to the current prediction unit for encoding motion information effectively. And the method determines one of the spatial and temporal motions vector candidates as a motion vector predictor and calculates a motion vector difference between the motion vector of the current prediction unit and the motion vector predictor. Therefore, it is possible to reduce the amount of coding bits required to encode the motion information of the current prediction unit using the temporal and the spatial motion vector candidates.

### [Description of Drawings]

FIG. 1 is a block diagram of an apparatus for encoding a moving picture according to the present invention.
FIG. 2 is a block diagram of an apparatus for decoding a moving picture according to the present disclosure.
FIG. 3 is a flow chart illustrating a procedure of generating a reconstructed block of a prediction unit encoding in skip mode according to the present disclosure.
FIG. 4 is a conceptual diagram showing positions of spatial skip candidates according to the present disclosure.
FIG. 5 is a conceptual diagram showing the positions of prediction units used to derive a temporal skip candidate according to the present disclosure.
FIG. 6 is a conceptual diagram illustrating positions of blocks in a temporal skip candidate picture corresponding to a current prediction unit according to the present disclosure.
FIG. 7 is a flow chart illustrating a procedure of generating a reconstructed block for the prediction unit motion vector prediction encoded according to the present disclosure.
FIG. 8 is a conceptual diagram showing positions of prediction units adjacent to the current prediction unit used to generate spatial motion vector candidates according to the present disclosure.

### [Mode for Invention]

Hereinafter, various embodiments of the present invention will be described in detail with reference to the accompanying drawings. However, the present invention is not limited to the exemplary embodiments disclosed below, but can be implemented in various types. Therefore, many other modifications and variations of the present invention are possible, and it is to be understood that within the scope of the disclosed concept, the present invention may be practiced otherwise than as has been specifically described.

For encoding an image, a picture is divided into a plurality of slices, and each slice is divided into a plurality of largest coding units (LCUs). The position of each LCU is designated by an address indicator. The LCU may be a coding unit itself or may be divided into a plurality of smaller coding units. The LCU contains information indicating structure of coding units in the LCU. One or more split flags are used to indicate the structure of coding units in the LCU.

Each coding unit consists of one or more prediction units (PUs). The prediction unit is a basic unit for intra prediction or inter prediction.

A transform unit (TU) is a basic block for transform coding. In intra prediction, the prediction unit may contain one or more transform units. In inter prediction, a transform unit may be comprised of one or more prediction units. The maximum size of the prediction unit is defined in a sequence parameter set (SPS), and the transform unit may be divided into a form of a quad tree. The maximum size of the prediction unit in intra prediction may be different from that of the prediction unit in inter prediction. The maximum sizes of the prediction unit in intra prediction and inter prediction are transmitted to a decoding apparatus through the SPS.

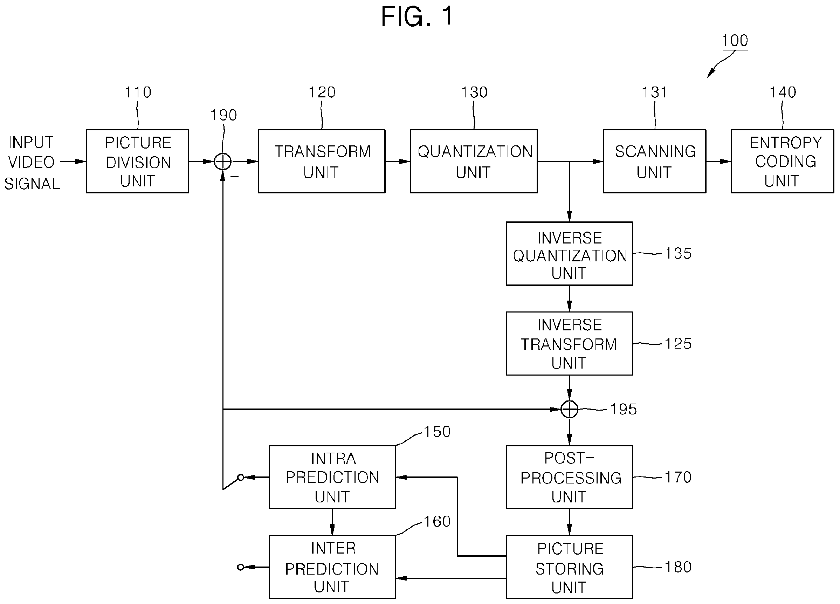

FIG. 1 is a block diagram of an apparatus for encoding a moving picture according to the present invention.

Referring to FIG. 1, an apparatus for encoding a moving picture 100 according to the present invention includes a picture division unit 110, a transform unit 120, a quantization unit 130, a scanning unit 131, an entropy coding unit 140, an intra prediction unit 150, an inter prediction unit 160, an inverse quantization unit 135, an inverse transform unit 125, a post-processing unit 170, a picture storing unit 180, a subtracter 190 and an adder 195.

The picture division unit 110 divides analyzes an input video signal to divide each LCU of a picture into one or more coding units each of which has a predetermined size, determine prediction mode of each coding unit, and determines size of prediction unit per each coding unit. The picture division unit 110 sends the prediction unit to be encoded to the intra prediction unit 150 or the inter prediction unit 160 according to the prediction mode. Also, the picture division unit 110 sends the prediction unit to be encoded to the subtracter 190.

The transform unit 120 transforms a residual block which is a residual signal between an original block of an input prediction unit and a prediction block generated by the intra prediction unit 150 or the inter prediction unit 160. The residual block may be composed of a coding unit. The residual block composed of a coding unit may be divided into optimal transform units and transformed. A transform matrix may be adaptively determined according to a prediction mode (intra or inter) and an intra prediction mode. The transform unit may be transformed by horizontal and vertical one-dimensional (1D) transform matrices. In inter prediction, one predetermined transform matrix is applied.

In intra prediction, there is a high possibility that the residual block will have vertical directivity when the intra prediction mode is horizontal. Thus, a discrete cosine transform (DCT)-based integer matrix is applied to the vertical direction, and a discrete sine transform (DST) or Karhunen Loève transform (KLT)-based integer matrix is applied to the horizontal direction. When the intra prediction mode is vertical, a DST or KLT-based integer matrix is applied to the vertical direction, and a DCT-based integer matrix is applied to the horizontal direction. When the intra prediction mode is DC, DCT-based integer matrix may be applied to both directions. The above-mentioned method may be applied when a size of the transform unit is equal to or smaller than a predetermined size. The predetermined size may be 4x4 or 8x8. Therefore, when the size of the transform unit is larger than the predetermined size, the DCT-based integer matrix or a 2-dimensional DCT-based integer matrix is applied to both directions. That is, in intra prediction, the transform matrix may be adaptively determined according to the size of the transform unit and the intra prediction mode.

The quantization unit 130 determines a quantization step size for quantizing transform coefficients of the residual block transformed by the transform matrix. The quantization step size is determined on a coding unit having a size equal to or larger than a predetermined size. For coding unit having a size smaller than the predetermined size, the quantization step size is determined on the predetermined size. Using the determined quantization step size and a quantization matrix determined according to a prediction mode, the transform coefficients of the transform block are quantized. The quantization unit 130 may determine a quantization step size of neighboring coding unit as a quantization step size predictor of the current coding unit. For example, the quantization unit 130 may determine a quantization step size of a left coding unit of the current coding unit as a quantization step size predictor. If the left coding unit is unavailable, the quantization step size of the previous coding unit in scan order is determined as the quantization step size predictor of the current coding unit. Alternatively, a first available quantization step size is determined as the quantization step size predictor by scanning in the order of a left coding unit, above coding unit and a previous coding unit.

The quantized transform block is provided to the inverse quantization unit 135 and the scanning unit 131.

The scanning unit 131 scans the quantized transform coefficients of the quantized transform block, thereby converts the quantized transform coefficients into 1D quantized transform coefficients. A scanning scheme for the coefficients is determined according to the prediction mode and the intra prediction mode. The scanning scheme for the coefficients may also be determined according to the size of the transform unit.

The scanning unit 131 determines whether or not to divide the quantized transform block into a plurality of subsets according to the size of the current transform unit. If the size of the transform unit is larger than a first reference size, the quantized transform block is divided into the plurality of subsets. The first reference size is preferably 4x4 or 8x8.

The scanning unit 131 determines a scan pattern to be applied to the quantized coefficient block. In inter prediction, a predetermined scan pattern (for example, zigzag scan) may be used. In intra prediction, the scan pattern may be selected based on the intra prediction mode and the size of the transform unit. In non-directional intra prediction mode, the predetermined scan pattern is used. The non-directional intra prediction mode may be a DC mode or a planar mode.

In directional intra prediction mode, the scan pattern may be varied according to the intra prediction mode and the size of the transform unit. In the directional intra prediction mode, the predetermined scan pattern may be used if the size of the transform unit is equal to or larger than a predetermined size, and a scan pattern may be adaptively selected based on the directional intra prediction mode if the size of the transform unit is smaller than the predetermined size. The predetermined size may be 16x16.

If the size of the transform unit is smaller than the predetermined size, one of three scan patterns may be used. The three scan patterns are a first scan pattern (same with the predetermined scan), a second scan pattern (a horizontal scan pattern) and a third scan pattern (a vertical scan pattern). For vertical intra prediction mode, the second scan pattern is applied because it is highly probable that the coefficients exist in the horizontal direction. For a predetermined number of directional intra prediction modes adjacent to the vertical intra prediction mode in left and right sides, the second scan pattern is applied. For horizontal intra prediction mode, the third scan pattern is applied. For the predetermined number of directional intra prediction modes adjacent to the horizontal intra prediction mode in above and below sides, the third scan pattern is applied. The predetermined number is preferably 3 or 4 for each direction.

The quantized coefficients are scanned in reverse direction. When the quantized coefficients are divided into a plurality of subsets, same scan pattern is applied to the quantized coefficients of each subset. The plurality of subsets consist of one main subset and one or more remaining subsets. The main subset is located at an upper left side and includes DC coefficients. The one or more remaining subsets cover region other than the main subset.

Zigzag scan is applied to scan the plurality of subsets. The plurality of subsets is preferably scanned beginning with the main subset to the remaining subsets in a forward direction, or can be scanned in a reverse direction. A scan pattern for scanning the plurality of subsets is set the same as the scan pattern for scanning the quantized coefficients of each subset. In this case, the scan pattern for scanning the plurality of subsets is determined according to the intra prediction mode. Meanwhile, an encoder transmits information capable of indicating a position of the last non-zero quantized coefficient of the transform unit to a decoder. The encoder also transmits information capable of indicating a position of the last non-zero quantized coefficient of each subset to the decoder.

The inverse quantization unit 135 inversely quantizes the quantized coefficients. The inverse transform unit 125 restores the residual block of the spatial domain from the inversely quantized transform coefficients. The adder generates a reconstructed block by adding the residual block reconstructed by the inverse transform unit 125 and the prediction block from the intra prediction unit 150 or the inter prediction unit 160.

The post-processing unit 170 performs a deblocking filtering process for removing blocking artifact generated in a reconstructed picture, an adaptive offset application process for complementing a difference between the reconstructed picture and the original image per pixel, and an adaptive loop filtering process for complementing a difference between the reconstructed picture and the original image in a coding unit.

The deblocking filtering process may be applied to a boundary between prediction units and a boundary between transform units having a predetermined size or more. The predetermined size may be 8×8. The de-blocking filtering process includes a step of determining a boundary to be filtered, a step of determining boundary filtering strength to be applied to the boundary, a step of determining whether or not to apply a deblocking filter, and a step of selecting a filter to be applied to the boundary when it is determined to apply the de-blocking filter.

Whether or not to apply the deblocking filter is determined according to i) whether or not the boundary filtering strength is greater than 0 and ii) whether or not a value indicating the difference between boundary pixels of P block and Q block which locate at a boundary to be filtered is smaller than a first reference value determined according to a quantization parameter.

Two or more filters may exist. When an absolute value of a difference between two pixels adjacent to the block boundary is equal to or larger than a second reference value, a weak filter is selected. The second reference value is determined by the quantization parameter and the boundary filtering strength.

The adaptive loop filtering process may be performed on the basis of a value obtained by comparing an original image and a reconstructed image to which the deblocking filtering process or the adaptive offset application process is applied. An adaptive loop filter (ALF) is detected through one Laplacian activity value on the basis of a 4×4 block. The determined ALF can be applied to all pixels included in a 4×4 block or an 8×8 block. Whether or not to apply an ALF may be determined pre coding unit. A size and coefficients of a loop filter may vary according to each coding unit. A slice header may include information indicating whether or not to apply the ALF to each coding unit, filter coefficient information and filter shape information, and so on. In the case of chrominance components, whether or not to apply the ALF may be determined in picture unit. Unlike luminance, the loop filter may have a rectangular shape.

The adaptive loop filtering process is performed on the basis of sequence or picture. The ALF filter parameter information is included in a picture header or a slice header. If the ALF filter parameter information is included in the picture header, the slice header does not contain the ALF filter parameter information. But, if the ALF filter parameter information is not included in the picture header, the slice header contains the ALF filter parameter information. The ALF filter parameter information includes information indicating a horizontal length and/or a vertical length of the filter for luminance components and a number of filters. If the number of filter is 2 or more, the ALF filter parameter information may contain information indicating whether the filters are encoded using prediction or not. The ALF filter parameter information includes the filter coefficients predicted when the filters are encoded using prediction. On the contrary, the ALF filter parameter information includes the filter coefficients unpredicted when the filters are encoded not using prediction.

Chrominance components may also be filtered adaptively. The ALF filter parameter information may include information whether each chrominance component is filtered or not. To reduce the amount of bits, the information indicating whether the Cr component is filtered and information indicating whether the Cb component is filtered may be coded jointly. It is preferable that an entropy coding which assigns the lowest information for the case that none of Cr and Cb components are not filtered because the probability that none of Cr and Cb components are not filtered is high. For the case that at least one of Cr and Cb components is filtered, the ALF filter parameter information includes information indicating a horizontal length and/or a vertical length of the filter coefficients for the chrominance components and information of filter.

Also, the ALF process may be on or off per coding unit equal to or larger than a predetermined size. Thus, each slice header contains information indicating whether the ALF process is applied or not per coding unit in the slice.

The picture storing unit 180 receives post-processed image data from the post-processing unit 170, and stores the restored image in picture unit. A picture may be an image in a frame or a field. The picture storing unit 180 has a buffer (not shown) capable of storing a plurality of pictures.

The inter prediction unit 160 performs motion estimation using one or more reference pictures stored in the picture storing unit 180, and determines a reference picture index indicating the reference picture and a motion vector. According to the reference picture index and the motion vector, the inter prediction unit 160 extracts a prediction block corresponding to a prediction unit to be encoded from a reference picture selected among a plurality of reference pictures stored in the picture storing unit 150 and outputs the extracted prediction block.

The intra prediction unit 150 performs intra prediction using reconstructed pixel values within a picture containing the current prediction unit. The intra prediction unit 150 receives the current prediction unit to be predictively encoded, selects one of a predetermined number of intra prediction modes, and performs intra prediction. The predetermined number of intra prediction modes may depend on the size of the current prediction unit. The intra prediction unit adaptively filters the reference pixels to generate the intra prediction block. When some of reference pixels are not available, it is possible to generate the reference pixels at the unavailable positions using one or more available reference pixels.

The entropy coding unit 140 entropy-codes the quantized coefficients quantized by the quantization unit 130, intra prediction information received from the intra prediction unit 150, motion information received from the inter prediction unit 160, and so on.

Meanwhile, the apparatus for encoding a moving picture 100 according to the present invention predictively encodes the motion vector. The encoding procedure of the motion vector is performed by the inter prediction unit 160 and the entropy coding unit 140. The encoding procedure of the motion vector in the apparatus for encoding a moving picture 100 is as follows.

A motion vector of the current prediction unit is obtained.

Available motion vectors of neighboring prediction units existing at predetermined positions are determined as spatial motion vector candidates. If the motion vector of neighboring prediction unit does not exist or the neighboring prediction unit is not included in a different slice, the motion vector is determined as unavailable.

Next, the spatial motion vector may be scaled adaptively. If the current prediction unit and the neighboring prediction unit have same reference picture, the motion vector candidate is not scaled. But, if the current prediction unit and the neighboring prediction unit have different reference pictures, or the temporal distances of the reference picture are not same, the motion vector candidate may be scaled using the temporal distances. The motion vector may not be scaled for a still image (for example, background image). In this case, a flag indication whether the motion vector is scaled or not may be transmitted to a decoder. The number of scaling of the spatial motion vector candidate may be limited to a predetermined number.

A motion vector predictor of the current prediction unit is selected among the spatial motion vector candidates and the temporal motion vector candidate,

The motion vector difference (MVD) between the motion vector of the current prediction unit and the motion vector predictor of the current prediction unit is obtained and encoded. And the information indicating the motion vector predictor is encoded.

The temporal motion vector candidate is a motion vector of a prediction unit which is located at or nearby a position in one reference picture, which is previously encoded, corresponding to the position of the current prediction unit. When there exist a plurality of motion vectors of the prediction unit which is located at or nearby the position in the one reference picture corresponding to the position of the current prediction unit, one motion vector is selected as a temporal motion vector according to a predetermined method. For example, if the motion vector of the block located at a first position corresponding to the current prediction unit in the picture is available, the motion vector is determined as the temporal motion vector candidate. But, if the motion vector of the block located at the first position is unavailable, the motion vector of a block located at a second position is determined as the temporal motion vector candidate.

In B slice (bi-directional prediction), the one reference picture containing the temporal motion vector candidate is derived from reference picture list 0 or 1. Therefore, the list information indicating the reference picture list is transmitted to a decoder, and the decoder determines the one reference picture using the list information.

Information indicating whether the temporal motion vector candidate is used or not may be included in the bit stream. Therefore, the decoding procedure of the motion vector may vary according to the information.

The spatial motion vector candidates include a left motion vector candidate and an above motion vector candidate. The left motion vector candidate of the current prediction unit is a motion vector of a prediction unit neighbored to left of the current prediction unit or a motion vector of a prediction unit neighbored to below-left of the current prediction unit. The left motion vector candidate is a first available motion vector encountered when retrieving the motion vectors of the left prediction unit and the below-left prediction unit in a predetermined order. The above motion vector candidate of the current prediction unit is a first available motion vector encountered when retrieving the motion vectors of a prediction unit neighbored to above of the current prediction unit, a prediction unit neighbored to above-right of the current prediction unit and a prediction unit neighbored to above-left of the current prediction unit in a predetermined order.

If motion vector candidates have the same values, the motion vector candidate having large order is eliminated.

If the motion vector candidate is one, the motion vector candidate is determined as motion vector predictor, and the predictor indicator indicting the motion vector predictor is not encoded.

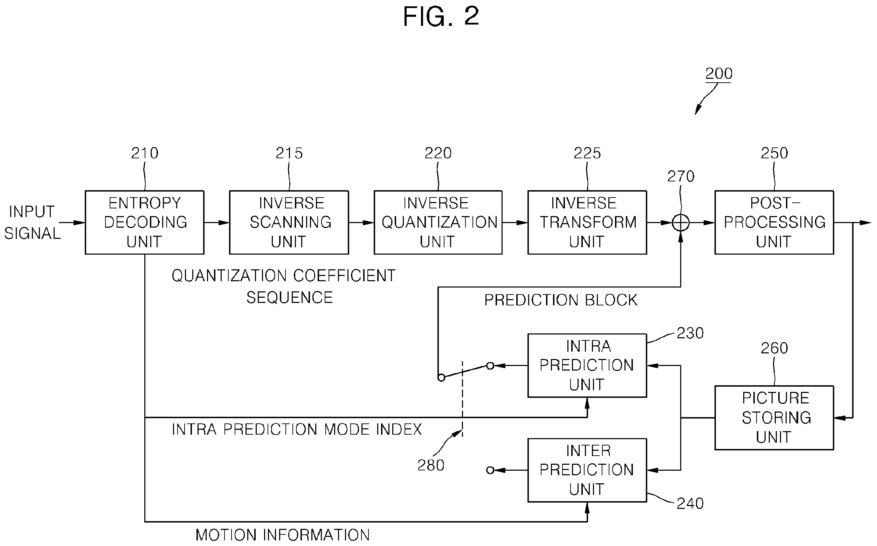

FIG. 2 is a block diagram of an apparatus for decoding a moving picture according to the present disclosure.

Referring to FIG. 2, the apparatus for decoding a moving picture 200 according to the present invention includes an entropy decoding unit 210, an inverse scanning unit 215, an inverse quantization unit 220, an inverse transform unit 225, an adder 270, a post-processing unit 250, a picture storing unit 260, an intra prediction unit 230, an inter prediction unit 240 and a intra/inter conversion switch 280.

The entropy decoding unit 210 extracts an intra prediction mode index, a motion information, a quantized coefficients sequence, and so on from a received bit stream transmitted from an apparatus for encoding a moving picture. The entropy decoding unit 210 transmits the motion information to the inter prediction unit 240, the intra prediction mode information to the intra prediction unit 230 and the inverse quantization unit 220, and the quantized coefficients sequence to the inverse quantization unit 220 and the inverse transform unit 225.

The inverse scanning unit 215 converts the quantized coefficients sequence into a two dimensional (2D) quantized transform unit. One of a plurality of inverse scan patterns is selected for the conversion. The inverse scan pattern for inversely scanning quantized coefficients may be selected based on the intra prediction mode. If a size of a current transform unit is larger than a predetermined reference size, the quantized coefficients sequence is inversely scanned in the unit of subset having the predetermined size to generate the quantized transform unit. If the size of the current transform unit is equal to the predetermined reference size, the quantized coefficients sequence is inversely scanned in the unit of the transform unit to generate the quantized transform unit. If the quantized coefficients are inversely scanned in the unit of subset, same inverse scan pattern is applied to the quantized coefficients in each subset. The plurality of subsets consist of one main subset and one or more remaining subsets. The main subset is positioned at an upper left side and includes DC coefficients, and the one or more remaining subsets cover region other than the main subset.

An inverse scan pattern to be applied to the subsets is a backward zigzag scan. The subsets may be inversely scanned beginning with the main subset to the remaining subsets in a forward direction, or can be inversely scanned in the backward direction. A scan pattern for inversely scanning the subsets may be set the same as an inverse scan pattern for inversely scanning the quantized coefficients. The inverse scanning unit 215 performs inverse scanning procedure using information indicating a position of the last non-zero quantized coefficient of the current transform unit.

In directional intra prediction mode, the inverse scan pattern for each subset may be varied according to the intra prediction mode and the size of the transform unit. That is, the predetermined scan pattern may be applied to a transform unit having a size equal to or larger than a predetermined size, and an inverse scan pattern may be adaptively selected based on the directional intra prediction mode for the transform unit having a size smaller than the predetermined size. The predetermined size may be 16x16. If the size of the transform unit is smaller than the predetermined size, one of three scan patterns may be used. The three scan patterns are a first scan pattern (same with the predetermined scan), a second scan pattern (a horizontal scan) and a third scan pattern (a vertical scan). For vertical intra prediction mode and a predetermined number of directional intra prediction modes adjacent to the vertical intra prediction mode in both sides, the second scan pattern is applied. Similarly, for horizontal intra prediction mode and the predetermined number of directional intra prediction modes adjacent to the horizontal intra prediction mode in both sides, the third scan pattern is applied. The predetermined number is preferably 3 or 4 for each direction.

The inverse quantization unit 220 restores a quantization step size to inversely quantize the 2D inverse quantized coefficients (that is, the 2D quantized transform unit). The quantization step size is determined on a coding unit having a size equal to or larger than a predetermined size. If the size of coding units is smaller than the predetermined size, the quantization step size is determined for the predetermined size. The inverse quantization unit 220 may use a quantization step size of a coding unit neighbored to a current coding unit as a quantization step size predictor of the current coding unit. For example, the inverse quantization unit 220 may determine a quantization step size of a left coding unit of the current coding unit as the quantization step size predictor of the current coding unit. If the left coding unit is unavailable, the quantization step size of a previous coding unit in scan order is determined as the quantization step size predictor of the current coding unit. Alternatively, an available quantization step size is determined as the quantization step size predictor of the current coding unit when scanning in the order of the left coding unit, an above coding unit and the previous coding unit.

When the quantization step size predictor is determined, the quantization step size is obtained by adding the quantization step size predictor and the received residual quantization step size. Then, the quantized transform unit is inversely quantized using an inverse quantization matrix determined according to the quantization step size and a prediction mode.

The inverse transform unit 225 inversely transforms the inverse quantized block (that is, a transform unit) to restore a residual block. An inverse transform matrix to be applied to the transform unit is adaptively determined according to the prediction mode (intra or inter) and the intra prediction mode. An inverse transform matrix of the transform matrix, which is applied to the transform unit 120 of FIG. 1, is applied.

The adder 270 adds the restored residual block reconstructed by the inverse transform unit 225 and a prediction block generated by the intra prediction unit 230 or the inter prediction unit 240 to restore an image block.

The post-processing unit 250 performs deblocking filter process to the restored image block generated by the adder 270. By this, blocking artifacts resulted from image loss according to a quantization process can be decreased.

The picture storing unit 260 is a frame memory which stores a reconstructed local image deblocking filtered by the post-processing unit 250.

The intra prediction unit 230 restores an intra prediction mode of the current block based on the received intra prediction mode index, and generates a prediction block according to the restored intra prediction mode.

The inter prediction unit 240 restores a motion vector of the current prediction unit based on the received motion information, and generates a prediction block of the current unit based on the motion vector from a picture stored in the picture storing unit 260. If motion compensation of decimal precision is applied, the prediction block is generated using a selected interpolation filter.

The inter prediction unit 240 decodes the motion vector as follows (AMVP decoding process).

The motion vector difference (MVD) is generated by restoring a difference between the encoded motion vectors.

Available motion vectors of prediction units neighbored to the current prediction unit and existing at predetermined positions are determined as spatial motion vector candidates. And the spatial motion vector candidates are adaptively scaled. If the current prediction unit and the neighboring prediction unit have same reference picture, the spatial motion vector candidates are not scaled. But, if the current prediction unit and the neighboring prediction unit have different reference pictures, the spatial motion vector candidates may be scaled using the temporal distances of the reference pictures.

A motion vector predictor of the current prediction unit is selected among the spatial motion vector candidates and a temporal motion vector candidate using motion information indicating motion vector predictor. Then, the motion vector difference and the selected motion vector predictor are added to generate a motion vector of the current prediction unit.

The temporal motion vector candidate is a motion vector of a prediction unit which is located at or nearby a position corresponding to the current prediction unit in a specific reference picture encoded previously. When there exist a plurality of motion vectors of the prediction unit which is located at or nearby the position corresponding to the position of the current prediction unit in the specific reference picture, one motion vector is selected as a temporal motion vector candidate according to a predetermined method. For example, if the motion vector of the block located at a first position corresponding to the current prediction unit in the specific picture is available, the motion vector is determined as the temporal motion vector candidate. But, if the motion vector of the block located at the first position is unavailable, the motion vector of a block located at a second position is determined as the temporal motion vector candidate.

In B slice, the specific reference picture containing the temporal motion vector candidate is derived from reference picture list 0 or 1. Therefore, the decoding unit determines the specific reference picture using the list information.

Information indicating whether the temporal motion vector is used or not may be included in the bit stream. Therefore, the decoding procedure of the motion vector may vary according to the information.

The spatial motion vector candidates include a left motion vector candidate and an above motion vector candidate. The left motion vector candidate of the current prediction unit is a motion vector of a prediction unit neighbored to the left of the current prediction unit or a motion vector of a prediction unit neighbored to the below-left of the current prediction unit. The left motion vector candidate is a first available motion vector encountered when retrieving the motion vectors of the left prediction unit and the below-left prediction unit in a predetermined order. The above motion vector candidate of the current prediction unit is a first available motion vector encountered when retrieving the motion vectors of an above prediction unit, an above-right prediction unit and an above-left prediction unit of the current prediction unit in a predetermined order.

If motion vector candidates have the same motion vectors, the motion vector candidate having large order is eliminated.

If the motion vector candidate is one, the motion vector candidate is determined as motion vector predictor, and information indicting the motion vector predictor is not encoded.

The intra/inter conversion switch 280 provides the prediction block generated by the intra prediction unit 230 or the inter prediction unit 240 to the adder 270 based on the prediction mode.

An inter prediction decoding method according to the present disclosure is described. The method comprises a procedure of decoding motion information of the current prediction unit, a procedure of generating a prediction block of the current prediction unit, a procedure of generating a residual block and a procedure of generating a reconstructed block using the prediction block and the residual block. The motion information includes a motion vector and a reference picture index.

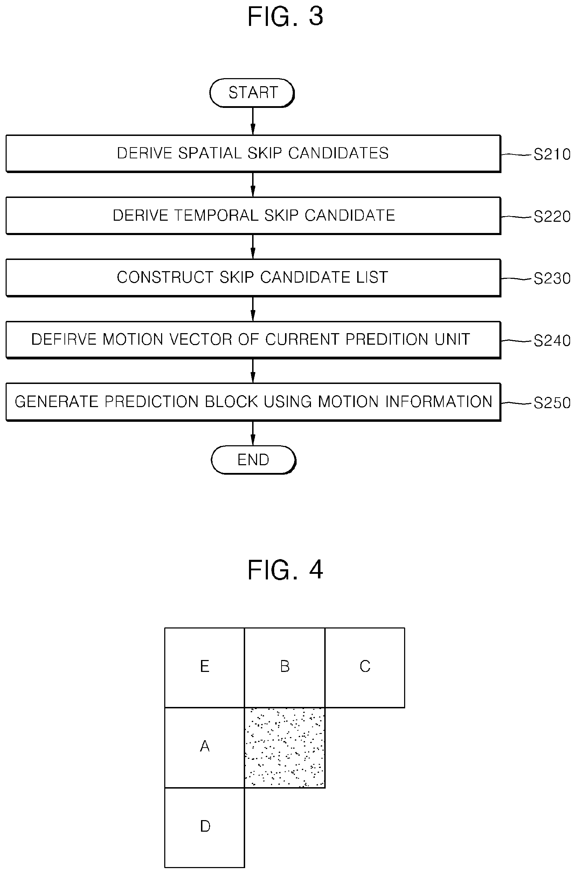

FIG. 3 is a flow chart illustrating a procedure of generating a reconstructed block of a prediction unit coded in skip mode according to the present disclosure. When the skip_flag of the received coding unit is 1, the procedure is performed.

First, spatial skip candidates are derived from neighboring prediction units in step S210.

As shown in FIG. 4, motion information of a left prediction unit of the current prediction unit (block A), motion information of an above prediction unit of the current prediction unit (block B), motion information of an above-right prediction unit of the current prediction unit (block C) and motion information of a below-left prediction unit of the current prediction unit (block D) may be the spatial skip candidates. Motion information of an above-left prediction unit of the current prediction unit (block E) can be a spatial skip candidate in a specific case. For example, if one or more blocks among the blocks A, B, C and D are unavailable, the information of block E can be the spatial skip candidate. The motion information includes the reference picture index and the motion vector.

Alternatively, motion information of a left prediction unit (block A), motion information of an above prediction unit (block B) and motion information of a corner prediction unit (C or D or E) may be the spatial skip candidate. The corner prediction unit may be the first available prediction unit encountered when retrieving the blocks C, D and E in a predetermined order (for example, in the order of block C, block D and block E, in the order of block E, block D and block C).

The availability is checked on each neighboring prediction unit. If the prediction unit does not exist or the prediction mode of the prediction unit is the intra mode, the prediction unit is determined as unavailable.

When there are a plurality of prediction units neighbored to left of the current prediction unit, the first available prediction unit encountered when checking availability of the plurality of left prediction units in a predetermined order (for example, from top to bottom or from bottom to top) may be determined as the left prediction unit. Alternatively, a prediction unit located at a predetermined position (for example, the uppermost left prediction unit or the lowest left prediction unit) may be determined as the left prediction unit. Similarly, when there are a plurality of prediction units neighbored to above of the current prediction unit, the first available prediction unit encountered when checking availability of the plurality of above prediction units in a predetermined order (for example, from left to right or from right to left) may be determined as the above prediction unit. Alternatively, a prediction unit located at a predetermined position (for example, the leftmost above prediction unit or the rightmost above prediction unit) may be determined as the above prediction unit.

The temporal skip candidate is derived in step S220. The step S220 includes a step for deriving a reference picture index for a temporal skip candidate and a step for deriving a motion vector of the temporal skip candidate.

The reference picture index for the temporal skip candidate is derived. The reference picture index for the temporal skip candidate may be set to 0. Alternatively, the reference picture index for the temporal skip candidate may be derived using reference picture indexes of prediction units spatially neighbored to the current prediction unit.

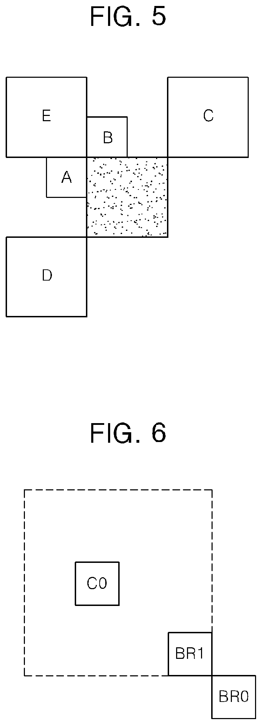

FIG. 5 is a conceptual diagram showing the positions of prediction units neighbored to the current prediction unit used to derive a reference picture index for the temporal skip candidate. The reference picture index for the temporal skip candidate is one of the reference picture indexes of the neighboring prediction units.

The reference picture indexes of a left prediction unit (block A), an above prediction unit (block B), an above-right prediction unit (block C), a below-left prediction unit (block D) and an above-left prediction unit (block E) may be used to derive the reference picture index for the temporal skip candidate.

When there are a plurality of above prediction units, a reference picture index of the first available prediction unit encountered when retrieving the plurality of above prediction units from left to right (or from right to left) may be determined as the reference picture index of the above prediction unit. Similarly, when there are a plurality of left prediction units, a reference picture index of the first available prediction unit encountered when retrieving the plurality of left prediction units from top to bottom may be determined as the reference picture index of the left prediction unit.

A reference picture index of the first available prediction unit encountered when retrieving blocks in the order of the above-right prediction unit (block C), the below-left prediction unit (block D) and the above-left prediction unit (block E) is determined as a reference picture index of a corner prediction unit.

When the reference picture index of the left prediction unit (left reference picture index), the reference picture index of the above prediction unit (above reference picture index) and the reference picture index of the corner prediction unit (corner reference picture index) of the current prediction unit are determined, the reference picture index for the temporal skip candidate is derived from them. Here, the only one out of blocks C, D and E is used to derive the reference picture index for the temporal skip candidate. But, blocks C and D (4 candidates) or all of the blocks C, D and E (5 candidates) may be used to derive the reference picture index for the temporal skip candidate. Hereinafter, the case that 3 reference picture indexes, that is, the left reference picture index, the above reference picture index and the corner reference picture index, are used will be described as an exemplary embodiment.

The reference picture index of the highest frequency out of available reference picture indexes is determined as the reference picture index for the temporal skip candidate. When there are a plurality of the reference picture indexes having highest frequency, the lowest reference picture index is determined as the reference picture index for the temporal skip candidate.

Next, the step for deriving motion vector for the temporal skip candidate is described.

First, a picture (a temporal skip candidate picture) to which the temporal skip candidate block belongs is determined. A reference picture of index 0 may be determined as the temporal skip candidate picture. The first picture of a list 0 is determined as the temporal skip candidate picture when the slice type is P. When the slice type is B, one reference picture list is selected using a flag within a slice header indicating the reference picture list to which the temporal skip candidate belongs, and a picture of which reference picture index is 0 from the selected reference picture list is determined as the temporal skip candidate picture. For example, when the flag is 1, the temporal skip candidate picture is selected from the list 0. And when the flag is 0, the temporal skip candidate picture is selected from the list 1.

Alternatively, a reference picture indicated by a reference picture index for the temporal skip candidate picture is determined as the temporal skip candidate picture which the temporal skip candidate block belongs to. For example, the reference picture indicated by the reference picture index for the temporal skip candidate picture in the list 0 is determined as the temporal skip candidate picture when the slice type is P. When the slice type is B, the temporal skip candidate picture is determined using the flag in the slice header indicating the list to which the temporal skip candidate belongs.

Next, a temporal skip candidate block in the temporal skip candidate picture is derived. One out of a plurality of blocks in the temporal skip candidate picture corresponding to the current prediction unit is selected as the temporal skip candidate block. A priority is assigned to each of the plurality of blocks. A first available block determined based on the priorities is selected as the temporal skip candidate block.

FIG. 6 is a conceptual diagram illustrating blocks in the temporal skip candidate picture corresponding to a current prediction unit.

It is preferred that a position of the temporal skip candidate is different from positions of spatial skip candidates.

Thus, a below-left corner block (block BR0) or a below-left block (block BR1) may be the first skip candidate block. The below-left corner block (block BR0) is adjacent to a block which is included in the temporal skip candidate picture and corresponds to the current prediction unit. The below-left block (block BR1) is located inside of a block which is included in the temporal skip candidate picture and corresponds to the current prediction unit. A block (block C) including an above-left pixel or a below-right pixel of a center position of a block which is included in the temporal skip candidate picture and corresponds to the current prediction unit may be the second skip candidate block.

If the first skip candidate block is available, the first skip candidate block is determined as the temporal skip candidate block. If the first skip candidate block is not available and the second skip candidate block is available, the second skip candidate block is determined as the temporal skip candidate block.

Alternatively, the blocks may be scanned in the order of BR0, BR1 and C. Also, there exist a plurality of available temporal skip candidate blocks, a largest corresponding block or a median value of the available temporal skip candidate blocks may be determined as the temporal skip candidate block.

When the temporal skip candidate block is determined, a motion vector of the temporal skip candidate block is set as the temporal skip candidate motion vector.

Next, a skip candidate list is constructed in step S230.

The skip candidate list is constructed using the available spatial skip candidates and the available temporal skip candidate. The skip candidate list may be constructed in a predetermined order. The predetermined order may be in the order of a spatial left skip candidate (candidate A), a spatial above skip candidate (candidate B), a temporal skip candidate, a spatial above-right skip candidate (candidate C) and a spatial below-left skip candidate (candidate D), or in the order of a temporal skip candidate, a spatial left skip candidate (candidate A), a spatial above skip candidate (candidate B), a spatial above-right skip candidate (candidate C) and a spatial below-left skip candidate (candidate D).

When one or more of the candidates A, B, C, D are not available, the spatial above-left skip candidate (candidate E) is added to the skip candidate list. In this case, the spatial above-left skip candidate (candidate E) is added to a position of the unavailable candidate. That is, availability of each spatial skip candidate is checked in the order of priority of each spatial skip candidate, and the spatial above-left skip candidate (candidate E) is added to the position of the unavailable candidate in the skip candidate list. The priority is assigned in the order of candidate A, candidate B, candidate C and candidate D or candidate A, candidate D, candidate B and candidate C.

If a plurality of skip candidates have same motion vector and same reference picture index in constructing the skip candidate list, the candidate having lower priority is deleted from the skip candidate list.

Next, the motion vector and the reference picture index of the current prediction unit are derived in step S240.

When there is a skip index in the received prediction unit, the motion vector and the reference picture index of the skip candidate prediction unit corresponding to the skip index are determined as the motion vector and the reference picture index of the current prediction unit.

When there is not the skip index in the received prediction unit and there exists a skip candidate, the motion vector and the reference picture index of the skip candidate are determined as the motion vector and the reference index of the current prediction unit.

When there is not the skip index in the received prediction unit and there does not exist the skip candidate, the motion vector and the reference index of the current prediction unit are set to 0.

When the skip candidate indicates the temporal skip candidate, the motion vector of the skip candidate is determined as the motion vector of the current prediction unit. And 0 or the reference picture index for the temporal skip candidate may be determined as the reference picture index of the current prediction unit.

The skip index may have been coded using a variable length coding (VLC) table determined by the number of the available skip candidates. If the skip index has been coded using a VLC table determined by the number of the available skip candidates, a step for decoding the skip index using a VLC table corresponding to the number of the available skip candidates may be inserted between the step 230 and the step 240. In step S240, motion information of the current prediction unit is determined using the decoded skip index. Alternatively, the number of skip candidates may be fixed. If the number of skip candidates is fixed, the skip candidate list may be constructed by generating skip candidates corresponding to one or more unavailable skip candidates using the available skip candidates.

If the motion vector and the reference picture index of the current prediction unit are derived, a prediction block is generated using the motion vector within a picture indicated by the reference picture index in step S250. The prediction block is a reconstructed block.

Meanwhile, when the skip_flag in the coding unit is 0 and merge_flag in the received prediction unit is 1, a procedure of generating a reconstructed block is almost same as the procedure of generating a reconstructed block of the skip mode. Specifically, the procedure of generating a prediction block is same as the procedure of generating a prediction block of the skip mode. In the skip mode, the generated prediction block is the reconstruction block because the residual block is 0. However, the residual block is not zero in the merge mode, a step for restoring a residual block and a step for generating a reconstructed block by adding the prediction block and the residual block are added.

Available spatial and temporal merge candidates are derived from neighboring prediction units. Procedures for obtaining the spatial merge candidates and the temporal merge candidate are the same as the spatial skip candidates and the temporal skip candidate, respectively.

Next, an available merge candidate list is constructed. The available spatial merge candidates and the available temporal merge candidate are arranged in a predetermined order. The predetermined order is the order of a spatial left merge candidate (candidate A), a spatial above merge candidate (candidate B), a temporal merge candidate, a spatial above-right merge candidate (candidate C) and a spatial below-left merge candidate (candidate D), or in the order of a temporal merge candidate, a spatial left merge candidate (candidate A), a spatial above merge candidate (candidate B), a spatial above-right merge candidate (candidate C) and a spatial below-left merge candidate (candidate D).

When one or more of the merge candidates A, B, C, D are not available, the spatial above-left merge candidate (candidate E) is added. In this case, the spatial above-left merge candidate (candidate E) is added to the position of the unavailable candidate in the merge candidate list. That is, availability of each spatial merge candidate is checked in the order of priority of each spatial merge candidate, and the spatial above-left merge candidate (candidate E) is added to the position of the unavailable candidate in the merge candidate list. The priority is assigned in the order of A, B, C and D or A, D, B and C.

Also, the predetermined order may be changed or one or more merge candidates are excluded from the merge candidates according to a prediction mode of the prediction unit. For example, if the prediction unit is 2NxN, the spatial below-left merge candidate (candidate D) may be excluded. If the prediction unit is Nx2N, the orders of the spatial below-left merge candidate (candidate D) and the spatial above-right merge candidate (candidate C) are changed or the spatial above-right merge candidate (candidate C) is excluded because correlation between the spatial below-left merge candidate (candidate D) and the current prediction unit is higher than that of between the spatial above-right merge candidate (candidate C) and the current prediction unit.

Next, the motion vector and the reference picture index of the current prediction unit are derived. When there is a merge index in the received prediction unit, the motion vector and the reference picture index of the merge candidate indicated by the merge index in the merge candidate list are determined as the motion vector and the reference index of the current prediction unit.

When there is not the merge index in the received prediction unit and there exists a merge candidate, the motion vector and the reference picture index of the merge candidate are determined as the motion vector and the reference index of the current prediction unit.

When there is not a merge index in the received prediction unit and there does not exist at least one skip candidate, the motion vector and the reference index of the current prediction unit are set to 0.

When the merge candidate indicates the temporal merge candidate, the motion vector of the temporal merge candidate is determined as the motion vector of the current prediction unit. And 0 or the reference picture index for the temporal merge candidate may be determined as the reference picture index of the current prediction unit.

The merge index may have been coded using a VLC table determined by the number of the available merge candidates. If the merge index has been coded using a VLC table determined by the number of the available merge candidates, a step for counting the number of the available skip candidates and decoding the skip index using a VLC table corresponding to the number may be inserted.

If the motion vector and the reference picture index of the current prediction unit are derived, a prediction block is generated using a motion vector in a picture indicated by the reference picture index.

Also, a residual block is restored in the unit of transform units. The residual block is restored through entropy decoding, inverse scan, inverse quantization and inverse transform. The procedure is performed by the entropy decoding unit 210, the inverse scanning unit 215, the inverse quantization unit 220 and the inverse transform unit 225 of the decoding apparatus of FIG. 2.

Finally, a reconstructed block is generated using the prediction block and the residual block. The reconstructed block may be generated in the unit of coding unit. Therefore, after the prediction block and the residual block are generated in the coding units respectively, and the reconstructed block may be generated using the prediction block in the unit of coding unit and the residual block in the unit of coding unit.

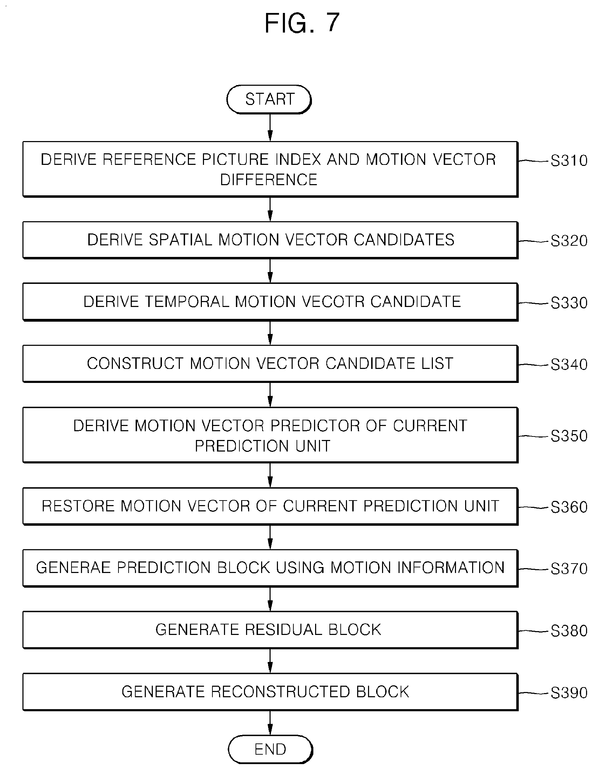

FIG. 7 is a flow chart illustrating a procedure of generating a reconstructed block of a motion vector prediction coded prediction unit according to the present invention. When the skip_flag in a coding unit is 0 and the merge_flag in a received prediction unit is 0, this procedure is applied.

First, a reference picture index and a motion vector difference of a current prediction unit are obtained from a prediction unit syntax of the received bit stream in step S310.

If slice type is B, inter prediction information is checked. If the inter prediction information indicates a uni-directional prediction using combined reference picture list (Pred LC), a reference picture among the reference pictures of the combined reference picture list (list c) is selected using the reference picture index, and the motion vector difference is restored. If the inter prediction information indicates a uni-directional prediction using a reference picture list 0, a reference picture is selected using the reference picture index of the reference picture list 0, and the motion vector difference is restored. If the inter prediction information indicates a bi-directional prediction, each reference picture is selected using each reference picture index of the reference picture lists 0 and 1, and each motion vector difference for each reference picture is restored.

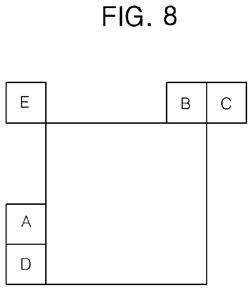

Next, spatial motion vector candidates are derived in step S320. FIG. 8 is a conceptual diagram showing positions of prediction units neighbored to a current prediction unit and used to generate motion vector candidates according to the present invention.

A spatial left motion vector candidate may be one of left prediction units (blocks A and D) of the current prediction unit. A spatial above motion vector candidate may be one of above prediction units (blocks B, C and E) of the current prediction unit.

A procedure for deriving a spatial left motion vector candidate is as follows.

It is checked whether there is a prediction unit satisfying first conditions by retrieving the left blocks of the current prediction unit in the order of blocks A and D or in the order of blocks D and A. The first conditions are 1) there exists a prediction unit, 2) the prediction unit is an inter prediction coded unit, 3) the prediction unit has same reference picture as that of the current prediction unit and 4) the prediction unit has same reference picture list as that of the current prediction unit. If there is a prediction unit satisfying the first conditions, the spatial left motion vector candidate is determined as the motion vector of the prediction unit. If there is not a prediction unit satisfying the first conditions, it is checked whether there is a prediction unit satisfying second conditions. The second conditions are 1) there exists a prediction unit, 2) the prediction unit is an inter prediction coded unit, 3) the prediction unit has same reference picture as that of the current prediction unit and 4) the prediction unit has different reference picture list from that of the current prediction unit. If there is a prediction unit satisfying the second conditions, the spatial left motion vector candidate is determined as the motion vector of the prediction unit.

If there is not a prediction unit satisfying the second conditions, it is checked whether there is a prediction unit satisfying third conditions. The third conditions are 1) there exists a prediction unit, 2) the prediction unit is an inter prediction coded unit, 3) the prediction unit has same reference picture list as that of the current prediction unit and 4) the prediction unit has different reference picture from that of the current prediction unit. If there is a prediction unit satisfying the third conditions, the spatial left motion vector candidate is determined as the motion vector of the prediction unit.

If there is not a prediction unit satisfying the third conditions, it is checked whether there is a prediction unit satisfying fourth conditions. The fourth conditions are 1) there exists a prediction unit, 2) the prediction unit is an inter prediction coded unit, 3) the prediction unit has different reference picture list from that of the current prediction unit and 4) the prediction unit has different reference picture from that of the current prediction unit. If there is a prediction unit satisfying the fourth conditions, the spatial left motion vector candidate is determined as the motion vector of the prediction unit.

The motion vector of the prediction unit satisfying the first conditions or the second conditions is used as it is. But, the motion vector of the prediction unit satisfying the third conditions or the fourth conditions is scaled and used as the motion vector candidate.

If there is not a prediction unit satisfying any one conditions presented above, the spatial left motion vector candidate is set to be unavailable.

Next, a procedure for deriving a spatial above motion vector candidate is as follows.

It is checked whether there is a prediction unit satisfying the first conditions by retrieving the above blocks in the order of blocks B, C and E or in the order of blocks C, B and E. If there is a prediction unit satisfying the first conditions, the spatial above motion vector candidate is determined as the motion vector of the prediction unit.

If there is not a prediction unit satisfying the first conditions, it is checked whether there is a prediction unit satisfying the second conditions. If there is a prediction unit satisfying the second conditions, the spatial above motion vector candidate is determined as the motion vector of the prediction unit.

If there is not a prediction unit satisfying the second conditions, it is checked whether there is a prediction unit satisfying the third conditions. If there is a prediction unit satisfying the third conditions, the spatial above motion vector candidate is determined as the motion vector of the prediction unit.

If there is not a prediction unit satisfying the third conditions, it is checked whether there is a prediction unit satisfying the fourth conditions. If there is a prediction unit satisfying the fourth conditions, the spatial above motion vector candidate is determined as the motion vector of the prediction unit.

The motion vector of the prediction unit satisfying the first conditions or the second conditions is used as the motion vector candidate at it is. But, the motion vector of the prediction unit satisfying the third conditions or the fourth conditions is scaled and used as the motion vector candidate.

If there is not a prediction unit satisfying any one conditions, the spatial above motion vector candidate is set to be unavailable.

The first to fourth conditions for determining the spatial left motion vector candidate are same with those for determining the spatial above motion vector candidate.

A temporal motion vector candidate is derived in step S330. First, a picture (a temporal skip candidate picture) to which a temporal motion vector candidate block belongs is derived. A reference picture of index 0 may be determined as the temporal motion vector candidate picture. For example, a first picture of the reference picture list 0 is determined as the temporal motion vector candidate picture when the slice type is P. When the slice type is B, the temporal motion vector candidate picture is determined using a flag of a slice header indicating a list to which the temporal motion vector candidate belongs. For example, if the flag is 1, the temporal motion vector candidate picture is determined from list 0, and if the flag is 0, the temporal motion vector candidate picture is determined from list 1. Alternatively, a picture corresponding to a reference picture index of the current prediction unit obtained from a received prediction unit is determined as the temporal motion vector candidate picture.

Next, a temporal motion vector candidate block in the temporal motion vector candidate picture is derived. The temporal motion vector candidate block is the same as the temporal skip candidate block. If the temporal motion vector candidate block is derived, the motion vector of the temporal motion vector candidate block is determined as the temporal motion vector candidate.

Next, a motion vector candidate list is constructed in step S340. The motion vector candidate list is constructed using available spatial and temporal motion vector candidates. The motion vector candidate list may be constructed in a predetermined order. The predetermined order is the order of a spatial left motion vector candidate, a spatial above motion vector candidate and a temporal motion vector candidate, or the order of a temporal motion vector candidate, a spatial left motion vector candidate and a spatial above motion vector candidate.

The predetermined order may be changed according to a prediction mode of the prediction unit or one or more motion vector candidates are excluded from the motion vector candidates. For example, if the current prediction unit is divided into two 2NxN prediction units, the spatial above motion vector candidate may be excluded for a lower 2NxN prediction unit. If the current prediction unit is divided into two Nx2N prediction units, the orders of the spatial above motion vector candidate and the spatial left motion vector candidate are changed or the spatial left motion vector candidate may be excluded for a right Nx2N prediction unit.

Alternatively, when a coding unit is divided into two 2NxN prediction units, the above 2NxN prediction block may be merged. If the above 2NxN prediction block may not be merged, the block D may be deleted or blocks A and D are scanned in this order when determining the spatial left motion vector candidate. When a coding unit is divided into two Nx2N prediction units, the left Nx2N prediction unit may be merged. If the left Nx2N prediction block may not be merged, the block C may be deleted or blocks B, C and E are scanned in this order when determining the spatial above motion vector candidate.

Next, when the motion vector candidate list is constructed and a plurality of candidates have same motion vector, the candidate having lower priority is deleted in the motion vector candidate list.

Next, a motion vector predictor of the current prediction unit is obtained in step S350.

When there is a motion vector index in the current prediction unit, the motion vector candidate of a corresponding index in the motion vector candidate list is determined as the motion vector predictor of the current prediction unit. When there is not a motion vector index in the current prediction unit and there exists a motion vector candidate, the motion vector candidate is determined as the motion vector predictor of the current prediction unit. When all motion vector candidates are not available, the motion vector predictor of the current prediction unit is set to 0.

Meanwhile, prior to construction of the motion vector candidate list, the motion vector index may be read. In this case, after retrieving available motion vector candidates by the number indicated by the motion vector index in a predetermined order, the motion vector candidate corresponding to the motion vector index may be determined as the motion vector of the current prediction unit. The motion vector index may be encoded in a fixed length or in a variable length.

If the motion vector predictor of the current prediction unit is obtained, a motion vector of the current prediction unit is reconstructed by adding the motion vector difference and the motion vector predictor in step S360.

Next, a prediction block is generated using the received reference picture index of the current prediction unit and the restored motion vector of the current prediction unit in step S370.

Also, a residual block is restored in the unit of transform units in step S380. The residual block is restored through entropy decoding, inverse scan, inverse quantization and inverse transform. The procedure is performed by the entropy decoding unit 210, the inverse scanning unit 215, the inverse quantization unit 220 and the inverse transform unit 225 of the decoding apparatus of FIG. 2.

Finally, a reconstructed block is generated using the prediction block and the residual block in step S390. The reconstructed block may be generated in the unit of coding unit. Therefore, after the prediction block and the residual block are generated in the unit of coding unit, and the reconstructed block is generated using the prediction block in the unit of coding unit and the residual block in the unit of coding unit.

While the invention has been shown and described with reference to certain exemplary embodiments thereof, it will be understood by those skilled in the art that various changes in form and details may be made therein without departing from the scope of the invention as defined by the appended claims

## Claims

1. An apparatus for encoding a moving picture, comprising:
a picture division unit (110) configured to determine a size and a prediction mode of each coding block;
an inter prediction unit (160) configured to determine a reference picture and a motion vector of a current block by performing motion estimation and extract a prediction block corresponding to the current block from the reference picture when the current block is encoded using inter prediction;
an intra prediction unit (150) configured to determine an intra prediction mode of a current block and generate the prediction block corresponding to the current block according to the intra prediction mode when the current block is encoded using intra prediction;
a transform unit (120) configured to transform a residual block obtained by calculating difference between the current block and the prediction block to generate a transform block;
a quantization unit (130) configured to determine a quantization step size of a current coding block and quantize the transform block using the quantization step size to generate a quantized transform block;
a scanning unit (131) configured to scan quantized transform coefficients of the quantized transform block to generate one-dimensional (1D) quantized transform coefficients; and
an entropy coding unit (140) configured to entropy-code the 1D quantized transform coefficients,
wherein the inter prediction unit (160) encodes a motion vector difference between the motion vector of the current block and a motion vector predictor, the motion vector predictor is an available spatial motion vector candidate or an available temporal motion vector candidate and the temporal motion vector candidate is an available motion vector encountered first when retrieving motion vectors in the order of motion vector of a first predetermined position and motion vector of a second predetermined position in a reference picture,
wherein the quantization step size is encoded using a quantization step size predictor and the quantization step size predictor is generated using a quantization step size of a left coding block of the current coding block and a quantization step size of an above coding block of the current coding block,
wherein, when the quantization step size of the left coding block of the current coding block and the quantization step size of the above coding block of the current coding block are unavailable, a quantization step size of previous coding block in scan order is selected as the quantization step size predictor of the current coding block,
wherein, when a size of the transform block is larger than 4x4, the quantized transform coefficients of the quantized transform block are divided into a plurality of subsets,
wherein, when the current block is encoded using intra prediction, the plurality of subsets are scanned according to a scan pattern determined by the intra prediction mode of the current block and the quantized transform coefficients of each subset are scanned according to a scan pattern determined by the intra prediction mode of the current block,
wherein, when the current block is encoded using inter prediction, the plurality of subsets and the quantized transform coefficients of each subset are scanned according to a predetermined scan pattern,
wherein the scan pattern for scanning the plurality of subsets is the same as the scan pattern for scanning the quantized transform coefficients of each subset.

2. The apparatus of claim 1, wherein the quantized transform coefficients of each subset and the plurality of subset are scanned in a reverse direction.

## Patentansprüche

1. Vorrichtung zum Codieren eines Bewegtbildes, umfassend:
eine Einheit (110) zum Unterteilen eines Bildes, die so konfiguriert ist, dass sie eine Größe und einen Prädiktions-Modus jedes Codierblocks bestimmt;
eine Einheit (160) für Inter-Prädiktion, die so konfiguriert ist, dass sie ein Bezugsbild und einen Bewegungsvektor eines aktuellen Blocks bestimmt, indem sie Bewegungs-Schätzung durchführt, und einen Prädiktionsblock, der dem aktuellen Block entspricht,
aus dem Bezugsbild extrahiert, wenn der aktuelle Block unter Verwendung von Inter-Prädiktion codiert wird;
eine Einheit (150) für Intra-Prädiktion, die so konfiguriert ist, dass sie einen Intra-Prädiktions-Modus eines aktuellen Blocks bestimmt und den Prädiktionsblock, der dem aktuellen Block entspricht, gemäß dem Intra-Prädiktions-Modus erzeugt, wenn der aktuelle Block unter Verwendung von Intra-Prädiktion codiert wird;
eine Transformationseinheit (120), die so konfiguriert ist, dass sie einen verbleibenden Block, der sich durch Berechnen einer Differenz zwischen dem aktuellen Block und dem Prädiktionsblock ergibt, transformiert, um einen Transformationsblock zu erzeugen;
eine Quantisierungseinheit (130), die so konfiguriert ist, dass sie eine Größe eines Quantisierungsschrittes eines aktuellen Codierblocks bestimmt und den Transformationsblock unter Verwendung der Größe eines Quantisierungsschrittes quantisiert, um einen quantisierten Transformationsblock zu erzeugen;
eine Scan-Einheit (131), die so konfiguriert ist, dass sie Scannen quantisierter Transformationskoeffizienten des quantisierten Transformationsblocks durchführt, um eindimensionale quantisierte Transformationskoeffizienten zu erzeugen; sowie
eine Einheit (140) für Huffman-Codierung, die so konfiguriert ist, dass sie Huffman-Codierung der eindimensionalen quantisierten Transformationskoeffizienten durchführt, wobei die Einheit (160) für Inter-Prädiktion eine Bewegungsvektor-Differenz zwischen dem Bewegungsvektor des aktuellen Blocks und einem Bewegungsvektor-Prädiktor codiert, der Bewegungsvektor-Prädiktor ein verfügbarer räumlicher Bewegungsvektor-Kandidat oder ein verfügbarer zeitlicher Bewegungsvektor-Kandidat ist und der zeitliche Bewegungsvektor-Kandidat ein verfügbarer Bewegungsvektor ist, der beim Abrufen von Bewegungsvektoren in der Reihenfolge eines Bewegungsvektors einer ersten vorgegebenen Position und eines Bewegungsvektors einer zweiten vorgegebenen Position in einem Bezugsbild zuerst erscheint,
wobei die Größe eines Quantisierungsschrittes unter Verwendung einer Größe eines Prädiktors für eine Größe eines Quantisierungsschrittes codiert wird und der Prädiktor für eine Größe eines Quantisierungsschrittes unter Verwendung einer Größe eines Quantisierungsschrittes eines linken Codierblocks des aktuellen Codierblocks sowie einer Größe eines Quantisierungsschrittes eines oberen Codierblocks des aktuellen Codierblocks erzeugt wird,
wenn die Größe eines Quantisierungsschrittes des linken Codierblocks des aktuellen Codierblocks und die Größe eines Quantisierungsschrittes des oberen Codierblocks des aktuellen Codierblocks nicht verfügbar sind, eine Größe eines Quantisierungsschrittes eines vorhergehenden Codierblocks in der Reihenfolge des Scannens als der Prädiktor für eine Größe eines Quantisierungsschrittes des aktuellen Codierblocks ausgewählt wird,
wenn eine Größe des Transformationsblocks größer ist als 4x4, die quantisierten Transformationskoeffizienten des quantisierten Transformationsblocks in eine Vielzahl von Teilmengen unterteilt werden,
wenn der aktuelle Block unter Verwendung von Intra-Prädiktion codiert wird, Scannen der Vielzahl von Teilmengen gemäß einem Scan-Muster durchgeführt wird, das durch den Intra-Prädiktions-Modus des aktuellen Blocks bestimmt wird, und die quantisierten Transformationskoeffizienten jeder Teilmenge gemäß einem Scan-Muster abgetastet werden, das durch den Intra-Prädiktions-Modus des aktuellen Blocks bestimmt wird,
wenn der aktuelle Block unter Verwendung von Inter-Prädiktion codiert wird, Scannen der Vielzahl von Teilmengen und der quantisierten Transformationskoeffizienten jeder Teilmenge gemäß einem vorgegebenen Scan-Muster durchgeführt wird,
und das Scan-Muster zum Scannen der Vielzahl von Teilmengen das gleiche ist wie das Scan-Muster zum Scannen der quantisierten Transformationskoeffizienten jeder Teilmenge.

2. Vorrichtung nach Anspruch 1, wobei Scannen der quantisierten Transformationskoeffizienten jeder Teilmenge und der Vielzahl von Teilmengen in einer umgekehrten Richtung durchgeführt wird.

## Revendications

1. Appareil de codage d'une image animée, comprenant :
une unité de division d'image (110) configurée pour déterminer une taille et un mode de prédiction de chaque bloc de codage ;
une unité de prédiction intermédiaire (160) configurée pour déterminer une image de référence et un vecteur de mouvement d'un bloc courant en effectuant une estimation de mouvement et pour extraire un bloc de prédiction correspondant au bloc courant de l'image de référence lorsque le bloc courant est codé à l'aide de la prédiction intermédiaire ;
une unité de prédiction intra (150) configurée pour déterminer un mode de prédiction intra d'un bloc courant et générer le bloc de prédiction correspondant au bloc courant selon le mode de prédiction intra lorsque le bloc courant est codé à l'aide de la prédiction intra ;
une unité de transformation (120) configurée pour transformer un bloc résiduel obtenu en calculant la différence entre le bloc courant et le bloc de prédiction afin de générer un bloc de transformation ;
une unité de quantification (130) configurée pour déterminer une taille de pas de quantification d'un bloc de codage courant et quantifier le bloc de transformation en utilisant la taille de pas de quantification pour générer un bloc de transformation quantifié ;
une unité de balayage (131) configurée pour balayer les coefficients de transformation quantifiés du bloc de transformation quantifié afin de générer des coefficients de transformation quantifiés unidimensionnels (1D) ; et
une unité de codage entropique (140) configurée pour coder les coefficients de transformation quantifiés 1D de manière entropique,
dans lequel l'unité de prédiction inter (160) code une différence de vecteur de mouvement entre le vecteur de mouvement du bloc courant et un prédicteur de vecteur de mouvement, le prédicteur de vecteur de mouvement étant un candidat vecteur de mouvement spatial disponible ou un candidat vecteur de mouvement temporel disponible et le candidat vecteur de mouvement temporel étant un vecteur de mouvement disponible rencontré en premier lors de l'extraction des vecteurs de mouvement dans l'ordre du vecteur de mouvement d'une première position prédéterminée et du vecteur de mouvement d'une seconde position prédéterminée dans une image de référence,
la taille du pas de quantification est codée à l'aide d'un prédicteur de taille de pas de quantification et le prédicteur de taille de pas de quantification est généré à l'aide d'une taille de pas de quantification d'un bloc de codage gauche du bloc de codage courant et une taille de pas de quantification d'un bloc de codage supérieur du bloc de codage courant,
lorsque la taille du pas de quantification du bloc de codage gauche du bloc de codage courant et la taille du pas de quantification du bloc de codage supérieur du bloc de codage courant ne sont pas disponibles, une taille du pas de quantification du bloc de codage précédent dans l'ordre de balayage est sélectionnée comme prédicteur de la taille du pas de quantification du bloc de codage courant,
lorsque la taille du bloc de transformation est supérieure à 4x4, les coefficients de transformation quantifiés du bloc de transformation quantifié sont divisés en plusieurs sous-ensembles,
dans lequel, lorsque le bloc courant est codé en utilisant la prédiction intra, la pluralité de sous-ensembles est balayée selon un schéma de balayage déterminé par le mode de prédiction intra du bloc courant et les coefficients de transformation quantifiés de chaque sous-ensemble sont balayés selon un schéma de balayage déterminé par le mode de prédiction intra du bloc courant,
dans lequel, lorsque le bloc courant est codé à l'aide de la prédiction intermédiaire, la pluralité de sous-ensembles et les coefficients de transformation quantifiés de chaque sous-ensemble sont balayés selon un schéma de balayage prédéterminé,
le schéma de balayage de la pluralité de sous-ensembles est le même que le schéma de balayage des coefficients de transformation quantifiés de chaque sous-ensemble.

2. Appareil selon la revendication 1, dans lequel les coefficients de transformation quantifiés de chaque sous-ensemble et de la pluralité de sous-ensembles sont balayés dans le sens inverse.
